# EUROPÄISCHE PATENTANMELDUNG

(11) **EP 1 568 404 A1**
(43) Veröffentlichungstag der Anmeldung: **31.08.2005**
(21) Anmeldenummer: 05100678.1
(22) Anmeldetag: 01.02.2005
(51) Int. Cl.: B01D 27/14, B01D 37/02, F01M 11/03

(54) **Flüssigkeitsfilter, insbesondere Ölfilter für eine Brennkraftmaschine**

(30) Priorität: 26.02.2004 DE 102004009907
(71) Anmelder: MANN+HUMMEL GmbH, 71638 Ludwigsburg (DE)
(72) Erfinder: Harenbrock, Michael, Dr., 71640, Ludwigsburg (DE); Klein, Gunnar-Marcel, 71579, Spiegelberg (DE)

(57) **Zusammenfassung**

Die Erfindung betrifft einen Flüssigkeitsfilter, insbesondere Ölfilter für eine Brennkraftmaschine mit einem Gehäuse, welches einen Einlass und einen Auslass aufweist und einem dichtend zwischen Einlass und Auslass angeordneten Filterelement, wobei das Filterelement mehrere Lagen aufweist und wenigstens eine Lage der Abscheidung von Partikeln aus dem Fluidstrom dient, wobei wenigstens eine weitere Lage mit aktiven Substanzen versetzt ist, derart, dass im Fluid vorhandene Schadstoffe chemisch oder physikalisch zersetzt oder gebunden werden, wobei die aktiven Substanzen in der zweiten Lage immobilisiert vorliegen.

## Beschreibung

### Stand der Technik

Die vorliegende Erfindung betrifft generell Ölfilter und Ölfiltersysteme. Sie betrifft insbesondere solche Filtersysteme, die bei der Filtration von Motorölen von Brennkraftmaschinen eingesetzt werden. Ganz speziell betrifft die Erfindung eine Verbesserung der Qualität von Motorenölen durch Maßnahmen in solchen Filtersystemen.

Öl erfüllt in Brennkraftmaschinen eine Reihe von wichtigen Aufgaben. Das Motorenschmieröl verringert die Reibung und somit den Verschleiß metallischer Komponenten, führt Wärme ab, dichtet den Brennraum ab und reinigt den Motorraum durch Ablösen und Dispergieren von Verunreinigungen. Motorenöle werden im Betrieb somit durch Verbrennungspartikel, Fremdstoffe und Abriebpartikel verschmutzt. Damit diese so genannten Primärpartikel keine Schäden innerhalb der Brennkraftmaschine, z. B. durch Verblocken von Schmierspalten und / oder über die Erzeugung von Sekundärverschleißpartikeln hervorrufen, die zur Verringerung der Motorlebensdauer führen können, müssen diese Partikel aus dem Ölkreislauf entfernt werden.

Die meistverwendete Methode, solche Kontaminierungen zu kontrollieren, ist die Verwendung eines Hauptstrom-Filtersystems. In einem solchen System wird Öl, das von einer Pumpe bewegt wird, durch ein Filter durchgeleitet, bevor es zu den einzelnen Maschinenkomponenten geführt wird. Dies stellt sicher, dass das gesamte Öl einer Filtration unterworfen wird. Ein solches Hauptstrom-System stellt jedoch immer einen Kompromiss zwischen der Fähigkeit des Öls, durch das Filtermedium zu fließen, und der Fähigkeit des Filters, Partikel zu beseitigen, dar.

In einem Hauptstrom-Filtersystem werden teilchenförmige Kontaminierungen durch Tiefenfiltration aus dem Öl entfernt. Die Anordnung von Fasern im Filtermedium resultiert in Öffnungen oder Durchgängen, durch die das Öl fließen kann. Dabei werden Partikel durch Abscheidungen an den Fasern des Tiefenfiltermediums zurückgehalten, während kleinere Partikel durch diese hindurchgelangen können. Derzeit bekannte Hauptstrom-Ölfilter zeigen im Allgemeinen eine 99 %ige Entfernungsrate von Partikeln, die größer als 40 Mikrometer sind.

Sobald die Faserdichte in den Filtern erhöht wird, ist es für das Öl schwieriger, durch das Filter hindurch zu fließen. Wenn der Fließwiderstand größer wird, verringert sich das Durchflussvolumen und der Öldruck filterabwärts. Um diese Verringerung zu kompensieren, könnte man die Oberfläche des jetzt dichteren Filters vergrößern. Um aber einen entsprechenden Druckabfall zu erhalten, der den konventionellen Hauptstrom-Systemen vergleichbar ist, und gleichzeitig eine ausreichende Filtrationsrate von Partikeln im Bereich von 5 - 20 Mikrometer erzielen zu können, müsste die Oberfläche um ein Vielfaches vergrößert werden. Im Allgemeinen ist das jedoch aus dem Blickwinkel von Baugröße und Kosten nicht praktikabel.

Eine Möglichkeit, die Ölfiltration zu verbessern, ist daher die Bereitstellung eines zweiten oder Nebenstrom-Filtersystems. Nebenstrom-Filtersysteme werden zusätzlich zu den existierenden Hauptstrom-Systemen verwendet und unterscheiden sich von diesen in mehrerlei Hinsicht. Zunächst wird nur ein geringer Teil des Ausstoßes der Ölpumpe zu dem Nebenstrom-Filter geleitet. Das Volumen beträgt normalerweise zwischen 5 und 10 % der Menge, die den Komponenten der Maschine insgesamt zugeführt wird. Nachdem das Öl das Nebenstrom-Filter passiert hat, wird es in die Maschine zurückgeleitet. Aufgrund der Tatsache, dass das Nebenstrom-Filter keine großen Flussraten verarbeitet, kann die Dichtheit des Filtermediums sehr viel größer sein. Dies erlaubt nicht nur eine verbesserte Effektivität für die Entfernung kleinerer Partikel, sondern gestattet oft auch die Entfernung anderer Kontaminationen, die von konventionellen Hauptstrom-Filtern nicht zurückgehalten werden.

Zudem geht, vor allem in der Automobilindustrie, der Trend aufgrund des begrenzten Platzangebots, zu immer kleineren Einheiten, während sich gleichzeitig die Ölflussraten erhöhen. Außerdem werden diese Öle in modernen Pkw Betriebsbedingungen ausgesetzt, die zu einer verstärkten thermischen oder chemischen Schädigung führen können. Darüber hinaus werden gesetzgeberische Forderungen zur Senkung von Emissionen aus Fahrzeugen ein Absenken der im Öl enthaltenen Additivmengen erforderlich machen, was zusätzlich zu den oben angeführten erschwerten Betriebsbedingungen eine weitere Erschwernis darstellt.

Ein großes Problem bei den heutzutage verwendeten Motorenölen liegt darin, dass bei der motorischen Verbrennung Stoffe gebildet werden, die zu einer physikalischen und chemischen Alterung des Öls führen. Ferner nimmt die Kontamination durch z. B. RußPartikel aus magerer Verbrennung und hohen AGR-Raten weiter zu, insbesondere auch die Verlängerung der Ölwechselintervalle. Es handelt sich hierbei z. B. um reaktive chemische Verbindungen wie Säuren, die aus Verbrennungsgasen und Wasser gebildet werden (z. B. salpetrige Säure), Oxidationsprodukte des Kraftstoffs (z. B. organische Säuren, Alkohole, Ketone und Aldehyde), Wasser, Hydroperoxide, sowie deren Reaktionsprodukte untereinander. Diese Komponenten können das Öl irreversibel schädigen, z. B. Eindicken, so dass es seine Aufgaben nicht mehr im erforderlichen Maße erfüllen kann. Die Menge an mobilen, d. h. im Schmierkreislauf befindlichen Additiven im Öl, die vor diesen Schädigungsreaktionen schützen und Verschmutzungen in Schwebe halten sollen, wird zukünftig durch ihren Beitrag zur Verschmutzung und Inaktivierung von Abgasfiltern reduziert werden. Durch diese Stoffe wird daher die chemische Standzeit der Filtermedien drastisch reduziert.

Die DE 101 07 034 A1 beschreibt ein Abtrennen von Schadstoffen aus einem Motoröl durch Wechselwirkung mit bestimmten Chemikalien, welche die Schadstoffe physikalisch binden oder chemisch zersetzen. Hierzu werden die aktiven Komponenten als Schüttgut dem Filter in einem separaten Behälter hinzugefügt oder durch Imprägnierung im Filtermedium eingebunden.

Die vorliegende Erfindung hat die Aufgabe, einen Flüssigkeitsfilter bereitzustellen, welcher die Funktionsfähigkeit der zu filtrierenden Flüssigkeit über die Dauer des Betriebes sicher stellt bzw. die Qualität der zu filternden Flüssigkeit generell verbessert.

Diese und weitere Aufgaben werden durch die Merkmale des Anspruch 1 gelöst. Weitere vorteilhafte Ausgestaltungen sind in den Unteransprüchen enthalten.

### Vorteile der Erfindung

Durch die Analyse der Alterungsreaktionen von Motorölen ist es möglich, die für das Öl schädlichen Verbindungen, die während des Fahrbetriebs des Kraftfahrzeugs gebildet werden, zu identifizieren.

Durch die Verwendung von chemisch oder physikalisch wirkenden Substanzen im Ölkreislauf von Verbrennungsmotoren, die diese Schadstoffe chemisch zersetzen oder binden können (= Additive), lassen sich somit die für den Betriebsstoff und die Brennkraftmaschine schädlichen Stoffe aus dem Ölstrom entfernen. Beispielsweise zersetzen chemisch aktive Substanzen, die sich im Öl aufbauenden Schadstoffe, wie Säurebestandteile, Peroxide, organische Nitrate und Säuren. Wohingegen physikalisch aktive Substanzen eine Verbindung oder Anlagerung der Schadstoffe bewirkt, welches eine physikalische Rückhaltung ermöglicht.

Der erfindungsgemäße Flüssigkeitsfilter weist ein Gehäuse mit wenigstens einem Einlass und wenigstens einem Auslass, sowie einem dichtend dazwischen angeordneten Filterelement auf. Das Filterelement weist hierbei ein mehrere Lagen umfassendes Filtermedium auf, wobei wenigstens eine Lage dem physikalischen Rückhalt oder auch der Abscheidung von Partikeln dient. Beispielsweise sei hier ein organisches, teilsynthetisches oder ein synthetisches Filterpapier oder Filtervlies genannt, bei dem eine Tiefenfiltration stattfindet. Zusätzlich zu dieser Abscheide- oder Filterlage ist eine weitere Lage vorgesehen, welche mit immobilisierten aktiven Substanzen zur chemischen oder physikalischen Zersetzung oder Bindung von Schadstoffen im Öl versehen ist. Die aktiven Substanzen sind dabei fest mit der zweiten Lage verbunden und liegen bevorzugt gleichmäßig verteilt über die gesamte Lage vor. Eine Erhöhung der Konzentration der aktiven Komponenten an bestimmten Stellen der aktiven Lage zur speziellen örtlichen Beeinflussung innerhalb des Filterelementes ist jedoch ebenso denkbar. Das Filterelement kann hierbei zick-zack-förmig oder sonst wie gefaltet oder als Radialwickel ausgestaltet sein und die zweite aktive Lage kann direkt parallel zur Filterlage angeordnet und mit dieser verbunden sein, oder aber auch als Wickel um die zick-zack-förmig oder sonst wie gefaltete Filterlage gewickelt sein. Bevorzugt sind jedoch Filterlage und aktive Lage parallel zick-zack-förmig gefaltet, um so eine große aktive Oberfläche zu bieten.

Gemäß einer Ausgestaltung der Erfindung ist die aktive Lage gegenüber der Abscheide- oder Filterlage anströmseitig angeordnet. Sie befindet sich also auf der Rohseite des Filterelementes. Dieses hat den Vorteil, dass die durch die aktive Lage gebundenen und / oder zersetzen Schadstoffe direkt im Anschluss in der Filterlage ausgefiltert werden können und so nicht auf die Reinseite und damit in das gereinigte Öl gelangen können.

Es ist vorteilhaft die aktiven Substanzen über ein Klebverfahren mit der zweiten Lage zu verbinden und diese dann mit der Filterlage zusammen zu kleben oder zu laminieren. Hierbei werden die aktiven Substanzen auf die mit Klebstoff aktivierte Lage beispielsweise aufgerieselt, so dass nur ein Bruchteil der aktiven Oberfläche der Substanzen mit Klebstoff bedeckt wird und diese damit nicht unwirksam werden. Ebenso ist es möglich, Klebstoff, z. B. in faseriger Form, auf eine auf der Trägerlage befindliche Schüttgut-Schicht aufzurieseln und so eine Art aktive Faservlieslage aufzubauen.

Eine alternative Lösung hierzu ist das Ausführen der aktiven Lage aus einem zumindest teilweise schmelzbaren Kunststoffmaterial, welches dann die aktiven Komponenten über ein Schmelz- oder Anschmelzverfahren bindet. Auch hier muss darauf geachtet werden, nur einen Bruchteil der wirksamen Oberfläche der aktiven Substanzen mit der entstehenden Schmelze zu verkleben.

Weiterhin ist es möglich, die aktive Lage aus zwei Faservliesschichten mit dazwischen angeordneten und gebundenen aktiven Substanzen auszuführen. Dabei ergibt sich der Vorteil, eine größere Menge an aktiven Substanzen immobilisieren zu können, ohne ein Auslösen der Substanzen bei hohen Durchströmungen befürchten zu müssen.

Gemäß einer vorteilhaften Ausgestaltung der Erfindung werden zum Binden und Zersetzen Stoffe als aktive Substanzen verwendet, wie sie unter anderem auch als Trägermaterialien in der Chromatographie eingesetzt werden, wie Kieselgel, Kieselgur, Calciumcarbonat und Aluminiumoxid. Ferner sind Stoffe geeignet, die über Adsorption und anschließende Zersetzung über saure oder basische funktionelle Gruppen die Schadstoffe unschädlich machen, wie z. B. Zeolithe. In hochwertigen Ölen ist beispielsweise Calciumcarbonat zugesetzt, um der Alterung durch Säurebildung im Öl vorzubeugen. Allerdings bildet sich hierdurch im Verbrennungsvorgang Calciumoxid in Ascheform, welches sich durch Ablagerungen insbesondere für die Abgasnachbehandlung negativ auswirken kann. Durch die Immobilisierung des Calciumcarbonates in der aktiven Lage ist es nun möglich, die positiven Funktionen des Stoffes zu nutzen ohne die Nachteile, die durch den Transport durch das Motorenöl in die Maßnahmen zur Abgasnachbehandlung, z. B. Dieselpartikelfilter, hinein, zu erhalten. Weiterhin ermöglicht dieses ein Heruntersetzen der Calciumcarbonat-Konzentration im Öl.

Gemäß einer alternativen Ausgestaltung der Erfindung bestehen die aktiven Substanzen aus Stoffen, die basische und / oder amphotere funktionelle Gruppen aufweisen. Auch hier geht es um die Neutralisierung entstehender Säuren im Öl, wobei die amphoteren Stoffe die Möglichkeit bieten, sowohl basische als auch saure Verbindungen binden bzw. zersetzen zu können.

Als Beispiele für die oben genannten Stoffe zur Verwendung als aktive Substanzen aus anorganischen Verbindungen bestehend, sind Metalloxide, -hydroxide, -hydrogencarbonate, -carbonate, -alkoholate, -carboxylate und weitere, dem Fachmann bekannte Stoffe zu nennen.

Alternativ hierzu können die aktiven Substanzen, welche basische und / oder amphotere funktionelle Gruppen aufweisen, aus organischen Verbindungen bestehen, wie beispielsweise Amine, Alkoholate, Carboxylate und weitere, dem Fachmann bekannte, Stoffe.

Gemäß einer weiteren Alternative bei der Zusammensetzung der aktiven Substanzen sind katalytisch aktive Substanzen wie Metalle und Metallverbindungen, beispielsweise Metalloxide, geeignet. Die katalytisch aktiven Stoffe setzen die Aktivierungsenergie zum Start eines Zersetzungsprozesses weit herunter und gehen ohne Veränderung aus der Reaktion wieder hervor. Die Auswahl des Stoffes erfolgt nach Gesichtspunkten der chemischen Beständigkeit der zu vernichtenden Schadstoffe.

Die katalytisch aktiven Substanzen können bevorzugt aus Metallen oder MetalloxidVerbindungen bestehen, da sie so leicht zu verarbeiten sind und sich auch die Applizierung einfach gestaltet.

Gemäß einer vorteilhaften Ausbildung der Erfindung lässt sich der erfindungsgemäße Flüssigkeitsfilter im Haupt- und / oder Nebenstrom eines Ölkreislaufes anordnen. Speziell die Anordnung im Nebenstromfilter hat den Vorteil, die Durchströmeigenschaften des Hauptstromfilters unangetastet zu lassen und die Zersetzung und Bindung von Schadstoffen im Nebenstromfilter vornehmen zu können, wo eine geringfügige Erhöhung der Druckdifferenz zwischen Roh- und Reinseite nicht negativ auf das Gesamtsystem wirkt. In vorteilhafter Weise wird als aktive Substanz ein Metalloxid eingesetzt, welches zwischen zwei klebrigen Faservliesschichten immobilisiert ist. Diese aktive Lage ist dann anströmseitig fest mit einer Filterlage des zick-zack-förmig gefalteten Filterelementes verbunden und wird dann im Haupt- und / oder Nebenstrom angeordnet. Das Metalloxid reagiert dann mit der im Öl vorhandenen schädlichen Säure zu unschädlichem immobilisiertem Metallsalz.

In einer alternativen Ausgestaltung der beschriebenen erfinderischen Lösung als Zwei-Lagen-Material können die aktiven Komponenten auch in der physikalisch aktiven Filtrationslage eingebunden sein. Voraussetzung hierfür ist, dass die Filtrationsleistung im Hinblick auf Abscheidegrad und insbesondere mechanische Stabilität nicht in unakzeptablem Maße beeinträchtigt wird. Ferner muss durch Anbindung an die Fasermatrix sicher gestellt sein, dass die aktive Komponente permanent an das Faserhaufwerk gebunden ist und somit nicht im Betrieb herausgewaschen werden kann. Ausführungsgemäße Lösungen sind somit u.a. Beimischungen von aktiven, anorganischen Fasern sowie von sphärischen aktiven Partikeln, die dauerhaft mit den Fasern über Imprägnierungen, ggfs. wie z.B. in OS DE 101 07 034 A1 beschrieben kovalent über chemische Gruppen, verbunden sind.

Diese und weitere Merkmale von bevorzugten Weiterbildungen der Erfindung gehen außer aus den Ansprüchen auch aus der Beschreibung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

## Patentansprüche

1. Flüssigkeitsfilter, insbesondere Ölfilter für eine Brennkraftmaschine mit einem Gehäuse, welches einen Einlass und einen Auslass aufweist und einem dichtend zwischen Einlass und Auslass angeordneten Filterelement, wobei das Filterelement mehrere Lagen aufweist und wenigstens eine Lage der Abscheidung von Partikeln aus dem Fluidstrom dient, **dadurch gekennzeichnet, dass** wenigstens eine weitere Lage mit aktiven Substanzen versetzt ist, derart, dass im Fluid vorhandene Schadstoffe chemisch oder physikalisch zersetzt oder gebunden werden, wobei die aktiven Substanzen in der zweiten Lage immobilisiert vorliegen.

2. Flüssigkeitsfilter nach Anspruch 1, **dadurch gekennzeichnet, dass** die zweite Lage im Verhältnis zur Abscheide- oder Filterlage anströmseitig angeordnet ist.

3. Flüssigkeitsfilter nach einem der Ansprüche 1 bis 2, **dadurch gekennzeichnet, dass** die aktiven Substanzen in der zweiten Lage unlösbar mit dieser über eine Verklebung verbunden sind..

4. Flüssigkeitsfilter nach einem der Ansprüche 1 bis 2, **dadurch gekennzeichnet, dass** die aktiven Substanzen mit der zweiten Lage über ein Anschmelzen der zweiten Lage unlösbar verbunden sind.

5. Flüssigkeitsfilter nach einem der vorhergehenden Ansprüche, **dadurch gekennzeichnet, dass** die aktive Lage zwei Faservliesschichten aufweist, wobei die aktiven Substanzen unlösbar zwischen den beiden Faservliesschichten angeordnet sind.

6. Flüssigkeitsfilter nach einem der vorhergehenden Ansprüche, **dadurch gekennzeichnet, dass** die aktiven Substanzen ausgewählt sind aus der Gruppe bestehend aus Kieselgel, Kieselgur, Calciumcarbonat, Zeolithe und Aluminiumoxid.

7. Flüssigkeitsfilter nach einem der Ansprüche 1 bis 5, **dadurch gekennzeichnet, dass** die aktiven Substanzen aus Stoffen bestehen, die basische und / oder amphotere funktionelle Gruppe aufweisen.

8. Flüssigkeitsfilter nach Anspruch 7, **dadurch gekennzeichnet, dass** die aktiven Substanzen aus anorganischen Verbindungen bestehen, wie Metalloxide, -hydroxide, -hydrogencarbonate, -carbonate, -alkoholate, -carboxylate und weitere.

9. Flüssigkeitsfilter nach Anspruch 7, **dadurch gekennzeichnet, dass** die aktiven Substanzen aus organischen Verbindungen bestehen, wie Amine, Alkoholate, Carboxylate und weitere.

10. Flüssigkeitsfilter nach einem der Ansprüche 1 bis 5, **dadurch gekennzeichnet, dass** es sich bei den aktiven Substanzen um katalytisch aktive Substanzen handelt.

11. Flüssigkeitsfilter nach einem der Ansprüche 1 bis 5, **dadurch gekennzeichnet, dass** die katalytisch aktiven Substanzen Metalle und Metallverbindungen enthalten.

12. Flüssigkeitsfilter nach einem der vorhergehenden Ansprüche, **dadurch gekennzeichnet, dass** das Filtermedium im Haupt- und / oder im Nebenstrom angeordnet ist.

13. Flüssigkeitsfilter nach einem der vorhergehenden Ansprüche, **dadurch gekennzeichnet, dass** die wenigstens eine Lage zur Partikelfiltration und die wenigstens eine weitere Lage mit den immobilisierten aktiven Substanzen zu einer einzigen physikalisch aktiven Filtrationslage kombiniert sind.
